# EUROPÄISCHE PATENTSCHRIFT

(11) **EP 1 159 131 B1**
(45) Veröffentlichungstag und Bekanntmachung des Hinweises auf die Patenterteilung: **21.06.2006**
(21) Anmeldenummer: 00907492.3
(22) Anmeldetag: 01.02.2000
(51) Int. Cl.: B32B 33/00, B32B 1/02, B29C 49/22, B65B 3/02, B65D 1/12, B65D 65/40, B65D 85/84, C08L 23/06

(54) **MEHRSCHICHTIGE VORRICHTUNG ZUM LAGERN UND TRANSPORTIEREN VON CHEMIKALIEN**
MULTILAYER DEVICE FOR STORING AND TRANSPORTING CHEMICALS
DISPOSITIF MULTICOUCHE PERMETTANT DE STOCKER ET DE TRANSPORTER DES PRODUITS CHIMIQUES

(30) Priorität: 11.02.1999 DE 19905765
(43) Veröffentlichungstag der Anmeldung: 05.12.2001
(73) Patentinhaber: Honeywell Specialty Chemicals Seelze GmbH, 30926 Seelze (DE); Altenkirchener Kunststoff GmbH, 74523 Schwäbisch Hall (DE); Richter Kunstofftechnik GmbH & Co. KG, 95460 Altenkirchen (DE); Merck Patent GmbH, 64293 Darmstadt (DE)
(72) Erfinder: HAHN, Hans-Ulrich, D-31535 Neustadt (DE)
(74) Vertreter: Bublak, Wolfgang
(86) Internationale Anmeldenummer: PCT/EP2000/000777
(87) Internationale Veröffentlichungsnummer: WO 2000/047412

(56) Entgegenhaltungen:
- EP-A- 0 673 841
- EP-A- 0 741 080
- WO-A-95/27754
- DE-A- 19 628 643
- DE-C- 4 310 641
- DATABASE WPI Section Ch, Week 198713 Derwent Publications Ltd., London, GB; Class A17, AN 1987-089836 XP002136845 & JP 62 039444 A (MITSUBISHI CHEM IND LTD) , 20. Februar 1987 (1987-02-20)
- DATABASE WPI Section Ch, Week 198939 Derwent Publications Ltd., London, GB; Class A17, AN 1989-282988 XP002136846 & JP 01 208115 A (MITSUBISHI KASEI CORP), 22. August 1989 (1989-08-22)

## Beschreibung

Die Erfindung betrifft eine mehrschichtige Vorrichtung zum Lagern und Transportieren von Chemikalien, insbesondere von flüssigen, hochreinen Chemikalien für die Elektronikindustrie.

Bei der Herstellung von elektronischen Bauelementen werden in vielen Fällen flüssige Chemikalien benötigt, an deren Reinheit hohe Ansprüche gestellt werden. Besonders bei der Herstellung hochintegrierter Mikrochips ist ein hoher Reinheitsgrad erforderlich. Generell sind die Anforderungen an die Reinheit von flüssigen Spezialchemikalien, z.B. von Prozeßchemikalien für die Elektronikindustrie, in den letzten Jahren stark gestiegen. Es genügt nicht mehr, die Chemikalien in der geforderten Reinheit herzustellen, sondern es muß auch dafür gesorgt werden, daß beim Transport, während der Lagerung und der Handhabung das Produkt nicht mehr verunreinigt wird. Darüber hinaus muß die Lager- und Transportsicherheit gewährleistet sein, da einige dieser Chemikalien aggressiv oder gar toxisch sein können. Ein unbeabsichtiges Ausfließen, beispielsweise aufgrund einer Beschädigung des Transportbehälters oder aufgrund von Undichtigkeiten, muß mit höchstmöglicher Sicherheit ausgeschlossen werden.

Bei der Materialauswahl für derartige Behälter müssen von daher zwei Aspekte berücksichtigt werden. Zum einen soll die Wahl dahingehend gerichtet sein, jegliche Verunreinigungen durch das mit der zu transportierenden bzw. zu lagernden Chemikalie in Kontakt kommende Wandmaterial des Behälters auszuschließen. Neben der Vermeidung der Kontamination der zu transportierenden Chemikalie und der Beständigkeit gegen mögliches Auslaugen durch die zu transportierende Chemikalie muß der Behälter zusätzlich sowohl eine ausreichende Steifigkeit als auch eine gewisse Elastizität aufweisen, so daß der Behälter gegenüber Druck und Stoß unempfindlich und stabil ist und weder zur Verformung noch zur Rißbildung neigt. Weiterhin ist es wünschenswert, daß das Fassungsvermögen des Behälters vergleichsweise groß ist, und seine Fertigung schnell und einfach ist.

Aus der DE 196 28 643 ist bekannt, daß bestimmte Polyethylene, insbesondere unstabilisierte HD-Polyethylene zur Herstellung von Lager- und Transportbehältern für flüssige, hochreine Chemikalien für die Elektronikindustrie gut geeignet sind. Insbesondere werden dabei HD-Polyethylene mit einer spezifischen Dichte von 0,940 - 0,970 g/cm³, insbesondere 0,942 - 0,961 g/cm³, genannt. Hierzu gehören insbesondere Polyethylene, die im Handel unter dem Warenzeichen Lupolen vertrieben werden. Darunter seien genannt Lupolen® 6021D, Lupolen® 5021D, Lupolen® 4261AQ149 und Lupolen® 4261AQ135. Gemäß dieses Standes der Technik wurden entsprechende Vorrichtungen durch Verschweißen von aus diesen Materialien bestehenden Platten hergestellt. Die Fertigung derartiger Behälter war aufgrund der Verschweißung entsprechend extrudierter Platten zeit-und kostenaufwendig. Darüber hinaus konnten aufgrund der Verschweißung und der dabei entstehenden Schweißnähte die qualitätserhaltenen Eigenschaften von Lupolen® 6021 D nicht in zufriedenstellender Weise gewährleistet werden. Andererseits gelang es bisher nicht, monoblasextrudierte Transportbehälter mit einem Volumen von z.B. 200 l blastechnisch herzustellen, bzw. erfüllten diese so hergestellten Behälter die mechanischen Anforderungen der Gefahrgutverpackungsprüfung nicht. JP-A-62-039444 beschreibt Kunststoffbehälter, deren innerste Schicht frei von Lichtschutzmitteln ist.

Eine Aufgabe der vorliegenden Erfindung ist es, eine Vorrichtung zum Lagern und Transportieren von Chemikalien, insbesondere von hochreinen, flüssigen Chemikalien für die Elektronikindustrie und ein entsprechendes Verfahren zur Herstellung einer erfinungsgemäßen Vorrichtung bereitzustellen, die den oben genannten Erfordernissen gerecht werden und darüber hinaus eine einfache und schnelle Fertigung ermöglichen.

Diese Aufgabe wird durch eine Vorrichtung gemäß Anspruch 1 und ein Verfahren gemäß Anspruch 11 gelöst. Weitere Ausgestaltungsmöglichkeiten und Vorteile werden in den Unteransprüchen angegeben.

Demgemäß wird erfindungsgemäß eine mehrschichtige, durch Coextrusion hergestellte Vorrichtung aus thermoplastischen Kunststoff zum Lagern und Transportieren von Chemikalien, insbesondere von flüssigen, hochreinen Chemikalien für die Elektronikindustrie bereitgestellt, wobei die füllgutseitig innerste Schicht der Vorrichtung aus einem stabilisatorfreien HD-PE (hochdichtes Polyethylen) gefertigt ist. Unter stabilisatorfreiem HD-PE wird im Rahmen dieser Erfindung HD-PE verstanden, das ohne jede Verwendung der normalerweise üblichen Stabilisatoren hergestellt wurde. Normalerweise übliche Stabilisatoren sind insbesondere Antioxidantien, die dem Fachmann bekannt sind (siehe z.B. Kunststoffe 78(2), 142 (1988)).

Vorzugsweise handelt es sich bei dem stabilisatorfreien HD-PE um ein Polyethylen mit einer spezifischen Dichte in einem Bereich von 0,940 bis 0,970 g/cm³, insbesondere von 0,942 bis 0,961 g/cm³, besonders bevorzugt von 0,946 bis 0,960 g/cm³, das im Kontakt mit hochreinen, flüssigen Chemikalien besonders geringe Mengen an Partikeln als Verunreinigungen abgibt.

In einer weiteren bevorzugten Ausführungsform handelt es sich bei dem stabilisatorfreien HD-PE um ein Polyethylen mit einer spezifischen Dichte in einem Bereich von 0,940 bis 0,970 g/cm³, insbesondere von 0,942 bis 0,961 g/cm³, besonders bevorzugt von 0,946 bis 0,960 g/cm³, das sowohl im Kontakt mit basischen, neutralen und sauren, hochreinen Chemikalien mindestens eine der folgenden ionischen Verunreinigungen wie folgt abgibt:
Al ≤ 60 ng/g,
Ca ≤ 60 ng/g,
Fe ≤ 63 ng/g,
Mg ≤ 16 ng/g,
Ti ≤ 4 ng/g,
Zn ≤ 6 ng/g,
Mn ≤ 0,3 ng/g,
Cu ≤ 1,5 ng/g.

Die unstabilisierten HD-PEs zeichnen sich ferner durch einen niedrigen Gehalt an Katalysatorresten aus, was bewirkt, daß von diesen Werkstoffen sowohl im Kontakt mit basischen als auch mit sauren, hochreinen Chemikalien besonders geringe Mengen ionischer Verunreinigungen abgegeben werden. Darüber hinaus werden vergleichsweise wenige Partikel durch irgendeine Wechselwirkung zwischen den zu lagernden oder zu transportierenden Chemikalien und dem Werkstoff erzeugt. Vorzugsweise verhält sich der Gehalt an Partikeln wie folgt:
Partikel mit einer Größe ≤ 0,5 µm: Gehalt ≤ 5/ml Flüssigkeit,
Partikel mit einer Größe ≤ 0,2µm: Gehalt ≤ 50/ml Flüssigkeit,
Partikel mit einer Größe ≤ 0,1µm: Gehalt ≤ 500/ml Flüssigkeit.

Besonders bevorzugt wird das HD-PE verwendet, das unter der Marke Lupolen® 6021 D im Handel vertrieben wird oder das HD-PE, das unter der Marke Lupolen® 4261 AQ 149 angeboten wird. Die Reinheit für Hochreinchemikalien ist bei diesem Werkstoff gegeben. Darüber hinaus ist dieses Material gut extrudierbar.

Zur Lösung dieses Problems wird erfindungsgemäß zur Herstellung einer Vorrichtung zum Lagern und Transportieren einer Hochreinchemikalie die Methode der Mehrschichtblasextrusion bzw. der Coextrusion gewählt. Dabei wird erfindungsgemäß die mechanisch schwache, hochreine Schicht aus stabilisatorfreiem HD-PE füllgutseitig eingesetzt, während das Material der äußersten Schicht ein frei wählbares, bekanntes, extrudierbares Material umfaßt. Die Methode der Mehrschichtblasextrusion erlaubt es, die erfindungsgemäße Vorrichtung in einem kontinuierlichen Arbeitsgang herzustellen. Dadurch lassen sich im Vergleich zu den bislang verwendeten Schweißverfahren erhebliche Kosten und auch Zeit einsparen. Darüber hinaus besitzt die erfindungsgemäße Vorrichtung eine wesentlich höhere Druck- und Fallfestigkeit als bisher bekannte Behälter, da sie aus einem Stück gefertigt ist und keine Schweißnähte oder ähnliche Schwachstellen aufweist. Bei der Coextrusion werden in der Extrusionsdüse mehrere Schichten Polymerschmelze übereinandergelegt und miteinander verbunden. Solche Mehrschichtdüsen haben mehrere Schmelzeingänge und einen gemeinsamen Ausgangskanal.

Bei Verwendung verschiedener Materialien für die innerste Schicht und für die anderen Schichten wird vorzugsweise zwischen die jeweiligen Schichten noch eine Haftvermittlerschicht extrudiert, so daß ein mechanisch stabiler und dauerhafter Verbund zwischen den Schichten entsteht, und die Vorrichtung stabil ist gegenüber Druck, Stoß und anderen äußeren mechanischen Einwirkungen. Im allgemeinen sind nämlich die Polymere miteinander thermodynamisch unverträglich. Vorzugsweise weist die erfindungsgemäße Vorrichtung 2 bis 5 Schichten auf. Dabei bestehen die einzelnen Schichten in der Reihenfolge von innen nach außen vorzugsweise aus den folgenden Materialien: HD-PE - Haftvermittler - Polyamid oder EVOH - Haftvermittler - beliebiges, extrudierbares PE. Vorzugsweise trägt dabei die innerste Schicht 10%-20%, die äußerste Schicht 50%-80% und die drei mittleren Schichten zusammen 10%-30% zur Wanddicke der Vorrichtung bei.

Vorzugsweise ist mindestens eine weitere Schicht der Vorrichtung, vorzugsweise die äußerste Schicht aus einem extrudierbaren Polymer oder Copolymer gefertigt, vorzugsweise aus einem HD-PE mit einer spezifischen Dichte in einem Bereich von 0,940 bis 0,970 g/cm³, insbesondere von 0,942 bis 0,961 g/cm³, besonders bevorzugt von 0,946 bis 0,960 g/cm³.

In einer bevorzugten Ausführungsform umfaßt die äußerste Schicht mindestens ein HD-PE aus der Gruppe Lupolen® 5261 D, Lupolen® 4261AQ135, Hostalen® GM6255, Fina® 56020, Borealis® 8214, Stamylan® 7731 und 7890, Daplen® AH 5493 oder ein Gemisch aus zwei oder mehr der HD-PE dieser Gruppe.

In einer bevorzugten Ausführungsform umfaßt die äußerste Schicht Pigmente, die die Schicht gegen UV-Licht schützen. Somit wird insbesondere beim Transport der Vorrichtung jegliche Beschädigung der Vorrichtung durch Lichteinstrahlung verhindert. Die Schicht behält ihre mechanisch stabilen Eigenschaften. Vorzugsweise wird hier als Pigment Ruß verwendet, aber auch Quarz, gebräuchliche Master-Batches und andere übliche Pigmente, wie beispielsweise Cu-phthalocyanin oder TiO₂, sowie organische UV-Stabilisatoren und Biphenylverbindungen können eingesetzt werden.

In einer weiteren bevorzugten Ausführungsform ist die äußerste Schicht elektrisch leitend. Dadurch wird das Auftreten eines Funkenflugs verhindert, da jede auf der Oberfläche auftretende Ladung abgeführt werden kann. Es kann somit im allgemeinen zu keiner elektrostatischen Aufladung der Vorrichtungsoberfläche gegenüber ihrer Umgebung kommen. Die Hauptgefahr der elektrostatischen Aufladung liegt vor allem im Zusammentreffen von Zündquellen mit explosionsfähigen (zündfähigen) Gemischen, wozu die in der Vorrichtung zu transportierenden Chemikalien durchaus zählen können. Elektrische Ladungen können infolge mechanischer Trennung, beispielsweise durch Reiben oder Schütten von festen Stoffen, beim Strömen oder Gießen von Flüssigkeiten oder durch Influenz auftreten. Vorzugsweise wird das Material der äußersten Schicht so gewählt, daß der spezifische elektrische Oberflächenwiderstand ≤ 10⁵ Ω ist. Die Oberfläche ist dadurch dauerantistatisch, wodurch sich die erfindungsgemäße Vorrichtung auch für den Einsatz in explosionsgefährdeten Bereichen eignet. Vorzugsweise wird hierbei als Material das HD-PE verwendet, das unter dem Warenzeichen Hostalen® GM 9350 C black im Handel vertreten ist.

In einer weiteren bevorzugten Ausführungsform der Erfindung wird die äußerste Schicht verstärkt, um z.b mittels Glasfasern oder durch Zusatz weiterer mechanisch stabiler Materialien, wie z.B. Poymerer, so die Druck-, Fall- und Stoßfestigkeit der erfindungsgemäßen Vorrichtung noch zu verstärken. Vorzugsweise sind in die äußerste Schicht zur Ermöglichung der Verstärkung Polyamidplättchen eingearbeitet. So lassen sich z.B. PE-Composites, wie z.B. Selar einarbeiten.

In einer besonders bevorzugten Ausführungsform ist die Vorrichtung zweischichtig aufgebaut. Die innerste, vorzugsweise aus Lupolen® 6021 D oder aus Lupolen® 4261 AQ 149 gefertigte Schicht trägt dabei zur Wanddicke vorzugsweise 20% bis 40% bei, während die äußerste Schicht entsprechend 60% bis 80% beiträgt. Diese Konfiguration hat sich als besonders stabil erwiesen.

In einer anderen bevorzugten Ausführungsform weist die Vorrichtung mindestens drei Schichten auf, wobei die mindestens eine mittlere Schicht aus produktionsbedingten Abfällen besteht. Es handelt sich dabei um die sogenannten Butzenabfälle; das sind diejenigen Teile, die bei dem "Fertig-in-Form-bringen" der Vorrichtung am oberen und unteren Ende abfallen.

Vorzugsweise weist die erfindungsgemäße Vorrichtung mindestens eine Öffnung, vorzugsweise zwei Öffnungen auf. Besonders bevorzugt ist dabei ein Öffnungsdurchmesser von ≤ 70 mm. Die Öffnungen dienen zur Aufnahme von Tauchro^{h-} ren oder Spundstopfen. Diese werden vorzugsweise aus einem oder mehreren der folgenden Materialien gefertigt: PE-HD, Perfluoralkoly-Polymere (PFA), Polypropylen, PVdF und perfluoriertes Polyethylenpropylen (FEP).

Eine bevorzugte Ausführungsform der erfindungsgemäßen Vorrichtung hat ein Füllvermögen ≥ 5 l, besonders bevorzugt ein Füllvermögen von ≥ 200 l. Durch die Herstellung der Vorrichtung mit Hilfe der Technik der Mehrschichtblasextrusion ist es möglich, einfach und schnell und in einem Arbeitsschritt eine Vorrichtung zum Transport und zur Lagerung von Hochreinchemikalien herzustellen, der den Sicherheitsanforderungen genügt. Dies bedeutet erhebliche Kosten- und Zeitersparnisse.

Ferner betrifft die Erfindung ein Verfahren zur Herstellung einer mehrschichtigen Vorrichtung zum Lagern und Transportieren von Chemikalien, insbesondere von flüssigen, hochreinen Chemikalien für die Elektronikindustrie mittels eines Mehrschichtblasextruders, der mindestens einen inneren Extruder und einen äußeren Extruder aufweist, wobei das Verfahren mindestens die folgenden Schritte aufweist:
a. Beschicken des äußeren Extruders mit einem extrudierbaren Polymer oder Copolymer und des inneren Extruders mit einem stabilisatorfreien HD-PE;
b. Plastifizieren des Polymers oder Copolymers in dem äußeren Extruder und des stabilisatorfreien HD-PE in dem inneren Extruder;
c. Coextrudieren des plastifizierten Polymers oder Copolymers in dem äußeren Extruder und des stabilisatorfreien HD-PE in dem inneren Extruder in eine Formgebungseinrichtung;
d. Formgebung für die Vorrichtung zum Lagern und Transportieren von Chemikalien in der Formgebungseinrichtung.

Vorzugsweise wird die Extrusion bei Inertgas-Überlagerung durchgeführt, um jede Kontaktmöglichkeit mit Sauerstoff zu vermeiden. Vorzugsweise wird hierbei Stickstoff als Inertgas eingesetzt. Bei Verwendung von Lupolen® 6021D ist allerdings keine Inertgas-Überlagerung notwendig. Die Arbeitstemperatur liegt oberhalb des Schmelzpunktes der zu extrudierenden Materialien. Vorzugsweise bei 180 bis 230°C.

In einer bevorzugten Ausführungsform des erfindungsgemäßen Verfahrens handelt es sich bei dem extrudierbaren Polymer oder Copolymer in dem äußeren Extruder um eines der im Zusammenhang mit der äußeresten Schicht bereits genannten Polymere und bei dem stabilisatortorfreien HD-PE in dem inneren Extruder vorzugsweise um ein im Zusammenhang mit der innersten Schicht bereits genannten HD-PE.

Mit Hilfe des erfindungsgemäßen Verfahrens ist es möglich, einfach und schnell eine mehrschichtige erfindungsgemäße Vorrichtung herzustellen. Es bedarf quasi nur eines einzigen kontinuierlichen Arbeitsganges, um den vollständigen Behälter zu formen. Nachträgliches Verschweißen von vorgefertigten Platten entfällt und somit natürlich auch das Auftreten von Schweißnähten an der fertigen Vorrichtung. Durch das unmittelbare Aufeinanderbringen der verschiedenen Schichten noch während deren Herstellung wird eine besondere Stabilität und ein besonders fester Kontakt zwischen den einzelnen Schichten geschaffen.

Ferner bezieht sich die Erfindung auf die Verwendung der erfindungsgemäßen Vorrichtung zum Lagern und/oder Transportieren einer Ammoniaklösung, insbesondere einer 20 - 30%igen Ammoniaklösung.

Weitere Vorteile, Merkmale und Anwendungsmöglichkeiten der vorliegenden Erfindung ergeben sich aus der nachfolgenden Beschreibung eines Ausführungsbeispiel in Verbindung mit der Zeichnung. Es zeigt:

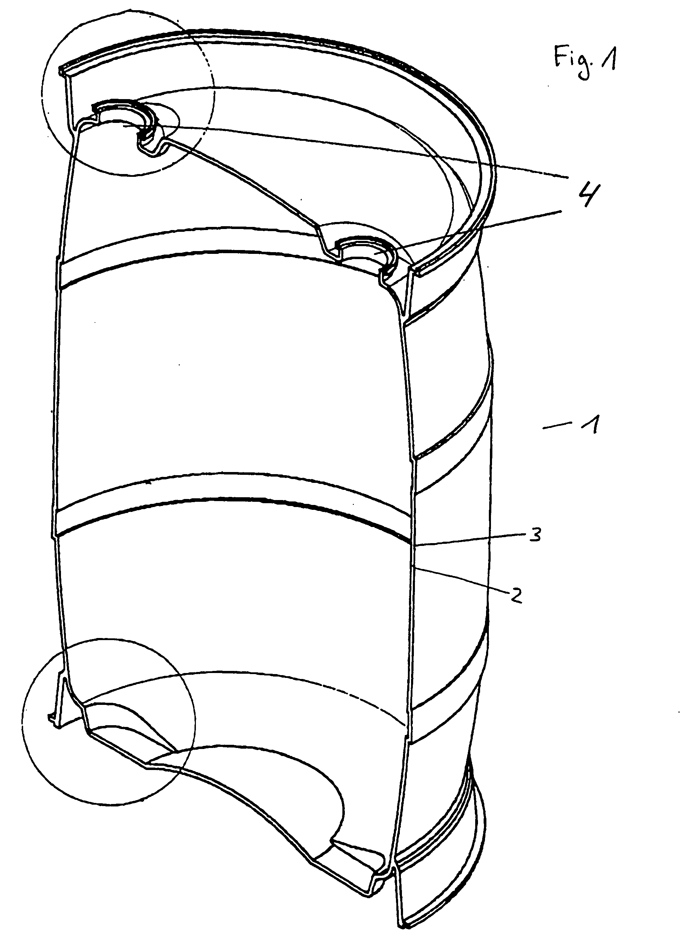

- Figur 1: eine Schnittansicht einer erfindungsgemäßen Vorrichtung aus thermoplastischen Kunststoff zum Lagern und Transportieren von Chemikalien, insbesondere von flüssigen, hochreinen Chemikalien für die Elektronikindustrie.

In Figur 1 ist der Schnitt einer erfindungsgemäßen Vorrichtung 1 zum Lagern und Transportieren von Chemikalien, insbesondere von flüssigen, hochreinen Chemikalien für die Elektronikindustrie dargestellt. Die Vorrichtung 1 ist zylinder- bzw. faßförmig. Sie weist eine innere Schicht 2 auf, die vorzugsweise aus Lupolen® 6021 D gefertigt ist, und eine äußere Schicht 3, vorzugsweise aus einem HD-PE. Vorzugsweise weist das HD-PE der äußeren Schicht 3 eine spezifische Dichte in einem Bereich von 0,940 bis 0,970 g/cm³, vorzugsweise von 0,942 bis 9,961 g/cm², besonders bevorzugt in einem Bereich von 0,946 bis 0, 960 g/cm². Die erfindungsgemäße Vorrichtung weist an ihrer Oberseite zwei Öffnungen 4 auf. Diese Öffnungen dienen zur Aufnahme von Tauchrohren oder Spundstopfen. Vorzugsweise ist der Durchmesser der Öffnungen 4 ≤ 70 mm. Am Boden der Vorrichtung sind vorzugsweise runde Einkerbungen zur Aufnahme der Tauchrohre vorgesehen. Mit deren Hilfe wird eine gute Restentleerung erreicht. Vorzugsweise umfaßt die äußere Schicht ein Pigment zum Schutz der inneren Schichten gegen UV-Licht. Weiterhin besonders bevorzugt ist die äußerste Schicht elektrisch leitfähig. Die Dicke der Wand der Vorrichtung wird vorzugsweise verhältnismäßig dick gewählt, um so eine optimale Druckfestigkeit der erfindungsgemäßen Vorrichtung zu erhalten. Dies ist zum sicheren Lagern und Transportieren der entsprechenden Chemikalien unabdingbar. Bei einem Fassungsvermögen von etwa 12 kg wählt man vorzugsweise eine Wandstärke von 5 mm, bei einem Fassungsvermögen von etwa 14 kg, entsprechend ein Wandstärke von 6 mm. Dabei trägt bei einem zweischichtigen Behälter die innere Schicht 20% bis 40% zur Wanddicke bei und die äußere Schicht entsprechend 60% bis 80%.

## Patentansprüche

1. Mehrschichtige, durch Coextrusion hergestellte Vorrichtung aus thermoplastischem Kunststoff zum Lagern und Transportieren von Chemikalien, insbesondere von flüssigen, hochreinen Chemikalien für die Elektronikindustrie,
**dadurch gekennzeichnet, daß**
die füllgutseitig innerste Schicht der Vorrichtung aus einem PE-HD frei von Antioxidantien gefertigt ist.

2. Vorrichtung nach Anspruch 1, **dadurch gekennzeichnet, daß** es sich bei dem PE-HD frei von Antioxidantien um ein Polyethylen mit einer spezifischen Dichte in einem Bereich von 0,940 bis 0,970 g/cm³ handelt.

3. Vorrichtung nach Anspruch 1 oder 2, **dadurch gekennzeichnet, daß** es sich bei dem PE-HD frei von Antioxidantien um ein Polyethylen handelt mit einer spezifischen Dichte in einem Bereich von 0,940 bis 0,970 g/cm³, das im Kontakt mit Chemikalien mindestens eine der folgenden ionischen Verunreinigungen wie folgt abgibt:
Al ≤ 60 ng/g,
Ca ≤ 60 ng/g,
Fe ≤ 63 ng/g,
Mg ≤ 16 ng/g,
Ti ≤ 4 ng/g,
Zn ≤ 6 ng/g,
Mn ≤ 0,3 ng/g,
Cu ≤ 1,5 ng/g.

4. Vorrichtung nach einem der vorangehenden Ansprüche, **dadurch gekennzeichnet, daß** mindestens eine weitere Schicht der Vorrichtung aus einem extrudierbaren Polymer oder Copolymer gefertigt ist.

5. Vorrichtung nach Anspruch 4, **dadurch gekennzeichnet, daß** die mindestens eine weitere Schicht aus einem PE-HD, insbesondere aus einem PE-HD mit einer spezifischen Dichte in einem Bereich von 0,940 bis 0,970 g/cm³ gefertigt ist.

6. Vorrichtung nach einem der vorhergehenden Ansprüche, **dadurch gekennzeichnet, daß** die mindestens eine weitere mindestens ein PE-HD oder ein Gemisch aus zwei oder mehrer PE-HD umfaßt.

7. Vorrichtung nach einem der vorhergehenden Ansprüche, **dadurch gekennzeichnet, daß** mindestens die äußerste UV-Schutz gewährende Pigmente umfaßt.

8. Vorrichtung nach einem der vorhergehenden Ansprüche, **dadurch gekennzeichnet, daß** die äußerste elektrisch leitend ist.

9. Vorrichtung nach einem der vorhergehenden Ansprüche, **dadurch gekennzeichnet, daß** die Vorrichtung zweischichtig ist, wobei der Beitrag der innersten zur Wanddicke in einem Bereich von 20% bis 40% liegt und der Beitrag der äußersten entsprechend in einem Bereich von 60% bis 80%.

10. Vorrichtung nach einem der Ansprüche 1 bis 8, **dadurch gekennzeichnet, daß** die Vorrichtung mindestens drei en umfaßt, wobei die mindestens eine mittlere produktionsbedingte Abfallprodukte umfassen kann.

11. Verfahren zur Herstellung einer mehrschichtigen Vorrichtung zum Lagern und Transportieren von Chemikalien, insbesondere von flüssigen, hochreinen Chemikalien für die Elektronikindustrie mittels eines Mehrschichtblasextruders, der mindestens einen inneren Extruder und mindestens einen äußeren Extruder aufweist, wobei das Verfahren mindestens die folgenden Schritte aufweist:
e. Beschicken des äußeren Extruders mit einem extrudierbaren Polymer oder Copolymer und des inneren Extruders mit einem HD-PE; frei von Antioxidantien ;
f. Plastifizieren des Polymers oder Copolymers in dem äußeren Extruder und des HD-PE frei von Antioxidantien in dem inneren Extruder;
g. Coextrudieren des plastifizierten Polymers oder Copolymers in dem äußeren Extruder und des HD-PE frei von Antioxidantien in dem inneren Extruder in eine Formgebungseinrichtung;
h. Formgebung für die Vorrichtung zum Lagern und Transportieren von Chemikalien in der Formgebungseinrichtung.

12. Verwendung der Vorrichtung nach einem der Ansprüche 1 bis 10 zum Lagern und/oder Transportieren einer Ammoniaklösung.

## Claims

1. Multilayered device of thermoplastic plastics made by means of coextrusion for storing and transporting of chemicals, in particular of liquid highly pure chemicals for electronics industry
**characterized in that**
the innermost layer on the contents side of the device is made of antioxidant-free HDPE.

2. Device according to claim 1, **characterized in that** the antioxidant-free HDPE is a polyethylene with a specific density within a range from 0.940 to 0.970 g/cm³.

3. Device according to claims 1 or 2, **characterized in that** the antioxidant-free HDPE is a polyethylene with a specific density within a range from 0.940 to 0.970 g/cm³ which is releasing the following ionic impurities in contact with chemicals as follows:
Al ≤ 60 ng/g,
Ca ≤ 60 ng/g,
Fe ≤ 63 ng/g,
Mg ≤ 16 ng/g,
Ti ≤ 4 ng/g,
Zn ≤ 6 ng/g,
Mn ≤ 0.3 ng/g,
Cu ≤ 1.5 ng/g.

4. Device according to anyone of the preceding claims, **characterized in that** at least one more layer of the device is made of an extrudable polymer or copolymer.

5. Device according to claim 4, **characterized in that** the at least one other layer is made of a HDPE, in particular of a HDPE with a specific density within a range from 0.940 to 0.970 g/cm³.

6. Device according to anyone of the preceding claims, **characterized in that** the at least one other layer comprises at least one HDPE from the group Lupolen® 5261Z, Lupolen® 4261AQ135, Hostalen®GM6255, Fina® 56020, Borealis® 8214, Stamylan® 7731, and 7890, Daplen® AH5493, or a mixture of two or more of these HDPEs.

7. Device according to anyone of the preceding claims, **characterized in that** at least the outermost layer comprises UV protective pigments.

8. Device according to anyone of the preceding claims, **characterized in that** the outermost layer is electrically conductive.

9. Device according to anyone of the preceding claims, **characterized in that** the device is bi-layered wherein the innermost layer adds about 20% to 40% and the outermost layer correspondingly 60% to 80% to wall thickness, respectively.

10. Device according to claims 1 to 8, **characterized in that** the device comprises at least three layers wherein the at least one medium layer may comprise waste products from manufacturing.

11. Method for producing a multilayered device for storing and transporting chemicals, in particular fluid, highly pure chemicals for electronics industry by means of a multilayer blow extruder comprising at least one inner extruder and one outer extruder wherein the method comprises at least the following steps:
e) charging the outer extruder with an extrudable polymer or copolymer and the inner extruder with a antioxidant-free HD-PE;
f) plasticizing the polymer or copolymer in the outer extruder and the antioxidant-free HD-PE in the inner extruder;
g) co-extruding the plasticized polymer or copolymer in the outer extruder and the antioxidant-free HD-PE in the inner extruder into a forming device;
h) forming the device for storing and transporting chemicals in the forming device.

12. Use of the device according to anyone of the claims 1 to 10 for storing and/or transporting of an ammonia solution.

## Revendications

1. Dispositif multicouche en matière thermoplastique artificielle réalisé par coextrusion pour le stockage et le transport de produits chimiques, en particulier de produits chimiques liquides de grande pureté pour l'industrie électronique, **caractérisé en ce que** la couche du dispositif située le plus à l'intérieur côté produit de remplissage est réalisée en PE-HD exempt d'antioxydants.

2. Dispositif selon la revendication 1, **caractérisé en ce que** le PE-HD exempt d'antioxydants est un polyéthylène d'un poids spécifique compris entre 0,940 et 0,970 g/cm³.

3. Dispositif selon la revendication 1 ou 2, **caractérisé en ce que** le PE-HD exempt d'antioxydants est un polyéthylène d'un poids spécifique compris entre 0,940 et 0,970 g/cm³ qui, au contact de produits chimiques, dégage au moins une des impuretés ioniques ci-dessous dans les proportions suivantes :
Al ≤ 60 ng/g,
Ca ≤ 60 ng/g,
Fe ≤ 63 ng/g,
Mg ≤ 16 ng/g,
Ti ≤ 4 ng/g,
Zn ≤ 6 ng/g,
Mn ≤ 0,3 ng/g,
Cu ≤ 1,5 ng/g.

4. Dispositif selon une des revendications précédentes, **caractérisé en ce qu'**au moins une couche supplémentaire du dispositif est réalisée en un polymère ou copolymère extrudable.

5. Dispositif selon la revendication 4, **caractérisé en ce que** la couche supplémentaire, au nombre d'au moins une, est réalisée en un PE-HD, en particulier en un PE-HD de poids spécifique compris entre 0,940 et 0,970 g/cm³.

6. Dispositif selon une des revendications précédentes, **caractérisé en ce que** la couche supplémentaire, au nombre d'au moins une, comprend au moins un PE-HD ou un mélange de deux ou plusieurs PE-HD.

7. Dispositif selon une des revendications précédentes, **caractérisé en ce qu'**au moins la couche la plus extérieure comprend des pigments garantissant une protection anti-UV.

8. Dispositif selon une des revendications précédentes, **caractérisé en ce que** la couche la plus extérieure est électroconductrice.

9. Dispositif selon une des revendications précédentes, **caractérisé en ce que** le dispositif est bicouche, la contribution de la couche la plus intérieure à l'épaisseur de paroi étant comprise entre 20 % et 40 % et la contribution de la couche la plus extérieure étant comprise en conséquence entre 60 % et 80 %.

10. Dispositif selon une des revendications 1 à 8, **caractérisé en ce que** le dispositif comprend au moins trois couches, la couche centrale, au nombre d'au moins une, pouvant comprendre des déchets issus de la production.

11. Procédé de fabrication d'un dispositif multicouche pour le stockage et le transport de produits chimiques, en particulier de produits chimiques liquides de grande pureté pour l'industrie électronique, au moyen d'une extrudeuse-souffleuse multicouche qui comporte au moins une extrudeuse intérieure et au moins une extrudeuse extérieure, le procédé comportant au moins les étapes suivantes :
e. alimentation de l'extrudeuse extérieure avec un polymère ou un copolymère extrudable et de l'extrudeuse intérieure avec un PE-HD exempt d'antioxydants ;
f. plastification du polymère ou du copolymère dans l'extrudeuse extérieure et du PE-HD exempt d'antioxydants dans l'extrudeuse intérieure ;
g. coextrusion, vers un dispositif de moulage, du polymère ou du copolymère plastifié dans l'extrudeuse extérieure et du PE-HD exempt d'antioxydants plastifié dans l'extrudeuse intérieure ;
h. moulage du dispositif pour le stockage et le transport de produits chimiques dans le dispositif de moulage.

12. Utilisation du dispositif selon une des revendications 1 à 10 pour le stockage et/ou le transport d'une solution d'ammoniac.
